# EUROPÄISCHE PATENTSCHRIFT

(11) **EP 3 501 467 B1**
(45) Veröffentlichungstag und Bekanntmachung des Hinweises auf die Patenterteilung: **22.01.2020**
(21) Anmeldenummer: 18211293.8
(22) Anmeldetag: 10.12.2018
(51) Int. Cl.: A61G 3/06, B60J 5/04

(54) **KRAFTFAHRZEUG UMFASSEND EINE SCHIEBETÜRE**
MOTOR VEHICLE COMPRISING A SLIDING DOOR
VÉHICULE AUTOMOBILE COMPRENANT UNE PORTE COULISSANTE

(30) Priorität: 20.12.2017 EP 17208962
(43) Veröffentlichungstag der Anmeldung: 26.06.2019
(73) Patentinhaber: MAGNA STEYR Fahrzeugtechnik AG & Co KG, 8041 Graz (AT)
(72) Erfinder: ERLACHER, Manuel, 9545 Radenthein (AT); HÖRMANN, Reinhard, 8151 Hitzendorf (AT); PASSEGGER, Wolfgang, 8430 Tillmitsch (AT); PLANKA, Franz, 9433 St. Andrä (AT)
(74) Vertreter: Zangger, Bernd

(56) Entgegenhaltungen:
- EP-A1- 3 078 520
- US-A- 5 577 793
- US-B1- 7 322 636

## Beschreibung

### Gebiet der Erfindung

Die vorliegende Erfindung betrifft ein Kraftfahrzeug umfassend eine Schiebetüre.

### Stand der Technik

Kraftfahrzeuge, wie Personenkraftwagen und Busse, können wie an sich bekannt mit Schiebetüren ausgestattet sein, so dass entweder ein Türflügel der Schiebetür seitlich in einer Fahrzeuglängsrichtung nach vorn oder nach hinten verschoben werden kann um die Türe zu öffnen, oder zwei seitliche Türflügel verschoben werden können, einer nach vorne und einer nach hinten, um die Tür zu öffnen.

Bekannt ist auch der Einsatz von Rampen um beispielsweise Rollstuhlfahrern den Zutritt in ein Kraftfahrzeug bei geöffneter Tür zu erleichtern. Hierzu können insbesondere im Kraftfahrzeug transportierte separate Rampenelemente bei geöffneter Tür auf einen Boden des Kraftfahrzeugs im Türbereich aufgelegt werden oder auch im Bodenbereich vormontierte Rampenteile ausgezogen oder ausgeschwenkt werden.

Die EP 3 078 520 A1 offenbart ein Fahrzeugtürsystem für eine Wohnkabine eines Caravans oder eines Motorcaravans, mit wenigstens zwei Türflügeln, wobei mit den Türflügeln eine Ein- und/oder Ausstiegsöffnung der Wohnkabine in einer Schließposition verschließbar oder in einer Öffnungsposition freigebbar ist, mit zumindest einem mit den Türflügeln verbundenen Öffnungsmittel, wobei das Öffnungsmittel derart ausgestaltet ist, dass die Türflügel zumindest in horizontaler Richtung (x) oder zumindest in horizontaler Richtung (y) bewegbar sind. Dabei kann ein weiterer Türflügel unterhalb der Ein- und/oder Ausstiegsöffnung als ausziehbarer Terrassenboden oder als ausfahrbare Aufstiegsstufe ausgestaltet sein.

### Zusammenfassung der Erfindung

Es ist eine Aufgabe der Erfindung, ein Kraftfahrzeug umfassend eine Schiebetüre anzugeben, dass einen einfachen und effizienten Zutritt über eine Rampe ermöglicht.

Die Lösung der Aufgabe erfolgt durch ein Kraftfahrzeug umfassend eine Schiebetüre, wobei die Schiebetüre zumindest einen seitlich am Kraftfahrzeug zwischen einer Geschlossenstellung und einer Offenstellung verschiebbaren Schiebetürflügel umfasst, wobei der Schiebetürflügel einen Unterteil des Schiebetürflügels umfasst, wobei der Unterteil in der Geschlossenstellung der Schiebetür an seiner Oberkante und soweit erforderlich an seinen Seitenkanten von der restlichen Schiebetür lösbar ist und an seiner Unterkante schwenkbar gelagert ist, so dass der Unterteil in der Geschlossenstellung der Schiebetür in eine Rampenstellung geschwenkt werden kann, in welcher der Unterteil eine Rampe bildet.

Erfindungsgemäß ist eine Rampenfunktion direkt in einen Flügel einer Schiebetür eingebaut. Der selbe Schiebetürflügel kann also in üblicher Weise in Fahrzeuglängsrichtung verschoben werden, um einen Zutritt in das Kraftfahrzeug in einer Offenstellung freizugeben oder in einer Geschlossenstellung zu verschließen, und beinhaltet auch einen unteren Teil des Schiebetürflügels, den Unterteil, der an seiner Unterkante angeschlagen in eine Rampenstellung verschwenkt werden kann, so dass beispielsweise eine Zufahrt mit einem Rollstuhl über die Rampe ermöglicht wird. Diese Doppelnutzung des Schiebetürflügels ermöglicht eine besonders platzsparende Bauweise. Zudem kann der Zustieg und Ausstieg aus dem Kraftfahrzeug über einerseits die Schiebetürfunktion und andererseits die Rampenfunktion bequem erfolgen und die gewünschte Stellung des Schiebetürflügels beispielsweise auf Knopfdruck aktiviert werden.

Der Unterteil kann beispielsweise die gesamte Breite des Schiebetürflügels einnehmen, so dass der Unterteil keine Seitenkanten oder eventuell nur eine Seitenkante umfasst, die vom restlichen Schiebetürflügel gelöst werden muss, um den Unterteil verschwenken zu können. Das Lösen der Seitenkanten bedeutet dabei, dass eine eventuelle Befestigung der Seitenkante am umgebenden Schiebetürflügel geöffnet wird, so dass ein Verschwenken des Unterteils allein ermöglicht wird. Wenn die Seitenkante ohnehin nicht an restlichen Teilen des Schiebetürflügel befestigt ist, ist ein Lösen der Seitenkante natürlich nicht erforderlich.

Der Unterteil kann auch fast die gesamte Breite des Schiebetürflügels einnehmen, so dass das Unterteil zwei Seitenkanten - eine in Fahrtrichtung vorne und eine in Fahrtrichtung hinten - umfasst, die wie oben beschrieben eventuell gelöst werden, so dass der Schiebetürflügel einen Rahmen ausbildet, der nicht zum verschwenkbaren Unterteil gehört.

Das Unterteil kann beispielsweise fast die gesamte Höhe des Schiebetürflügels einnehmen, so dass im Bereich der Oberkante des Unterteils lediglich ein Rahmen des Schiebetürflügels nicht zum verschwenkbaren Unterteil gehört.

Vorzugsweise umfasst der Schiebetürflügel einen Oberteil des Schiebetürflügels, wobei der Oberteil in der Geschlossenstellung der Schiebetür an seiner Unterkante und soweit erforderlich an seinen Seitenkanten von der restlichen Schiebetür lösbar ist und an seiner Oberkante schwenkbar gelagert ist, so dass der Oberteil in der Geschlossenstellung der Schiebetür in eine Dachstellung geschwenkt werden kann, in welcher das Oberteil ein Dach bildet. Durch Verwendung eines derartigen verschwenkbaren Oberteils kann auch der Unterteil kürzer ausgebildet werden und dennoch eine gute freie Höhe für den Zutritt über die Rampe in der Geschlossenstellung der Schiebetür erreicht werden.

Bevorzugt bilden der Unterteil und der Oberteil zusammen im Wesentlichen die gesamte Höhe des Türflügels, wobei auch ein nichtverschwenkbarer Rahmen oben und/oder unten am Schiebetürflügel verbleiben kann.

Bevorzugt besteht ein Schiebetürflügel ausschließlich aus einem Unterteil und einem schmalen Rahmenelement oder ausschließlich aus einem Unterteil und einem Oberteil und zusätzlich einem schmalen Rahmenelement, wobei das Rahmenelement ausschließlich oben und/oder unten oder auch zusätzlich an den Seiten von Unterteil bzw. Oberteil ausgebildet sein kann, also in Fahrtrichtung vorne und/oder hinten am Fahrzeug.

Die Oberkante des Unterteils und die Unterkante des Oberteils können bevorzugt aneinander befestigt werden und vorzugsweise in der aneinander befestigten Stellung verriegelt werden.

Vorzugsweise umfasst die Schiebetüre zwei seitlich am Kraftfahrzeug zwischen einer Geschlossenstellung und einer Offenstellung verschiebbare Schiebetürflügel, wobei in der Offenstellung einer der Schiebetürflügel in Fahrtrichtung nach vorne und der andere Schiebetürflügel nach hinten verschoben ist. Beide Schiebetürflügel sind dann bevorzugt so ausgebildet wie zuvor beschrieben. Insbesondere kann jeder der beiden Schiebetürflügel jeweils einen Unterteil des Schiebetürflügels umfassen, wobei der Unterteil jeweils in der Geschlossenstellung der Schiebetür an seiner Oberkante und gegebenenfalls an seinen Seitenkanten von der restlichen Schiebetür lösbar ist und an seiner Unterkante schwenkbar gelagert ist, so dass die beiden Unterteile in der Geschlossenstellung der Schiebetür in eine Rampenstellung geschwenkt werden können. Die beiden Unterteile der Schiebetürflügel bilden in der Rampenstellung bevorzugt zusammen eine Rampe.

Die in Fahrtrichtung hintere Seitenkante des vorderen Unterteils kann in der Rampenstellung an der vorderen Seitenkante des hinteren Unterteils befestigt sein, und insbesondere in dieser Befestigung verriegelt sein. Die beiden Unterteile sind dann in der Rampenstellung seitlich aneinander befestigt um eine gemeinsame Rampe zu bilden.

Beide Schiebetürflügel können jeweils einen Oberteil des Schiebetürflügels umfassen, wobei der Oberteil jeweils in der Geschlossenstellung der Schiebetür an seiner Unterkante und gegebenenfalls an seinen Seitenkanten von der restlichen Schiebetür lösbar ist und an seiner Oberkante schwenkbar gelagert ist, so dass der jeweilige Oberteil in der Geschlossenstellung der Schiebetür in eine Dachstellung geschwenkt werden kann, in welcher beide Oberteile zusammen ein Dach bilden. Die beiden Oberteile können wieder seitlich verbunden sein, also aneinander befestigt oder auch verriegelt, um ein gemeinsames Dach zu bilden.

### Kurzbeschreibung der Zeichnungen

Die Erfindung wird im Folgenden beispielhaft unter Bezugnahme auf die Zeichnungen beschrieben.
- Fig. 1: ist eine schematische dreidimensionale Ansicht eines erfindungsgemäßen Kraftfahrzeugs umfassend eine Schiebetüre mit zwei Schiebetürflügeln, wobei sich die Schiebetüre in der Geschlossenstellung befindet.
- Fig. 2: ist eine schematische dreidimensionale Ansicht eines Kraftfahrzeugs gemäß Fig. 1, wobei sich die Schiebetür in der Offenstellung befindet.
- Fig. 3: ist eine schematische dreidimensionale Ansicht eines Kraftfahrzeugs gemäß Fig. 1, wobei sich die Schiebetür in der Geschlossenstellung in der Rampenstellung befindet.

### Detaillierte Beschreibung der Erfindung

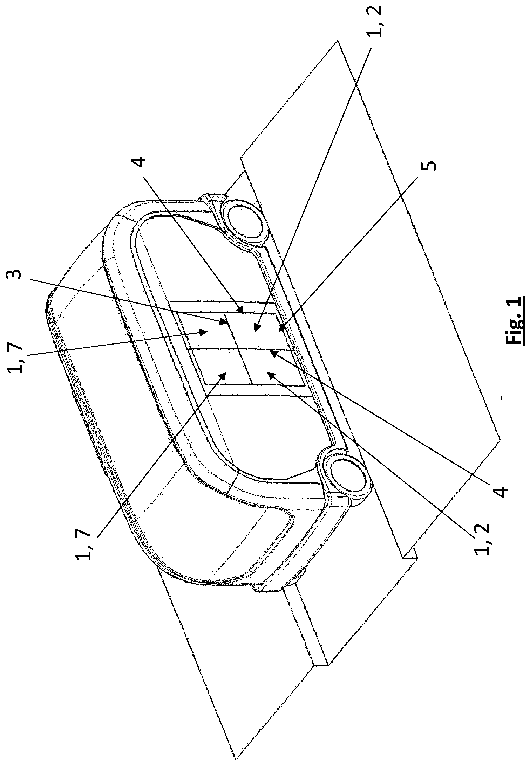

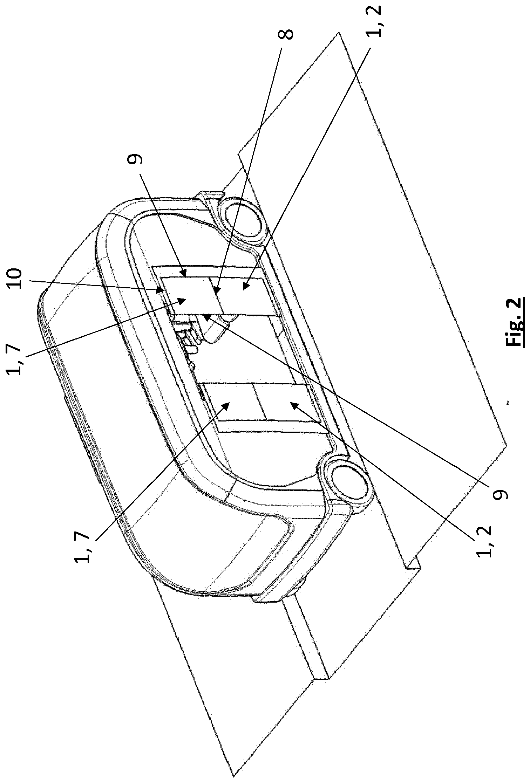

In Fig. 1 ist ein erfindungsgemäßes Kraftfahrzeug umfassend eine Schiebetüre dargestellt. Die Schiebetüre umfasst zwei seitlich am Kraftfahrzeug zwischen einer Geschlossenstellung und einer Offenstellung verschiebbare Schiebetürflügel 1, von welchen - wie in Fig. 2 dargestellt - in der Offenstellung einer der Schiebetürflügel 1 in Fahrtrichtung nach vorne und der andere Schiebetürflügel 1 nach hinten verschoben ist. Die beiden Schiebetürflügel 1 bilden daher zusammen eine Schiebetür mit zwei Flügeln, die in der Offenstellung eine mittige Zutrittsöffnung freigeben.

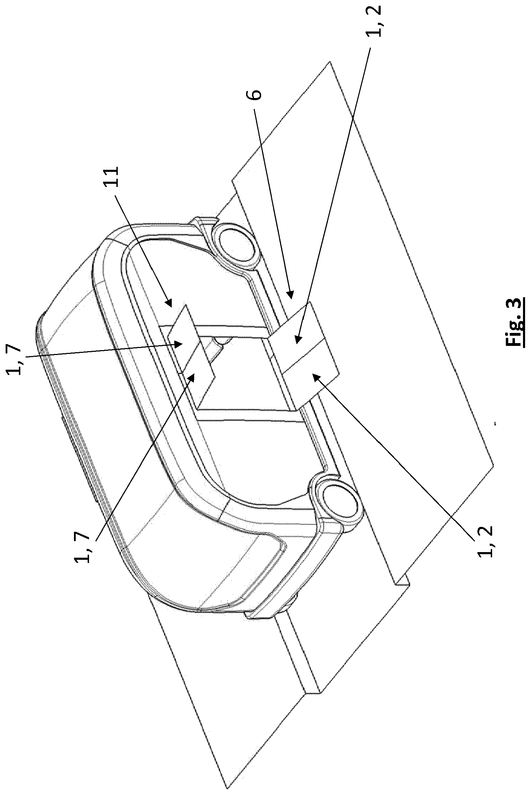

Beide Schiebetürflügel 1 sind funktional gleich und geometrisch spiegelsymmetrisch ausgebildet. Jeder Schiebetürflügel 1 weist einen Unterteil 2 auf, wobei der Unterteil 2 jeweils in der Geschlossenstellung der Schiebetür an seiner Oberkante 3 von der restlichen Schiebetür lösbar ist und an seiner Unterkante 5 schwenkbar gelagert ist, so dass die Unterteile 2 in der Geschlossenstellung der Schiebetür in eine Rampenstellung geschwenkt werden können, in welcher beide Unterteile zusammen eine Rampe 6 bilden (siehe Fig. 3).

Damit die Unterteile 2 von den restlichen Teilen der Schiebetürflügel 1 trennbar und an deren Unterkanten 5 schwenkbar werden, müssen die Unterteile auch soweit erforderlich an deren Seitenkanten 4 von anderen Teilen des Schiebetürflügels 1 gelöst werden können. Ein Lösen ist dabei nur insoweit nötig, als die Seitenkanten 4 nicht ohnehin frei stehen, weil diese beispielsweise den Abschluss des Schiebetürflügels 1 bilden oder jedenfalls nicht am restlichen Schiebetürflügel 1 befestigt sind.

Ferner umfasst jeder der beiden Schiebetürflügel 1 auch jeweils einen Oberteil 7 des Schiebetürflügels 1 - siehe insbesondere Fig. 2 -, wobei der Oberteil 7 jeweils in der Geschlossenstellung der Schiebetür an seiner Unterkante 8 und gegebenenfalls an seinen Seitenkanten 9 von der restlichen Schiebetür lösbar ist und an seiner Oberkante 10 schwenkbar gelagert ist, so dass der jeweilige Oberteil 7 in der Geschlossenstellung der Schiebetür in eine Dachstellung geschwenkt werden kann, in welcher beide Oberteile zusammen ein Dach 11 bilden - siehe Fig. 3.

Der Unterteil 2 und der Oberteil 7 erstrecken sich zusammen über im Wesentlichen die gesamte Höhe des Türflügels 1. Dabei verbleibt beispielsweise lediglich ein schmaler Rahmen zur Lagerung der schwenkbaren Unterteile 2 und Oberteile 7 des Türflügels 1, der sich mit dem Schiebetürflügel 1 mit öffnet und schließt und nicht zum Unterteil 2 oder Oberteil 7 gehört.

Die Oberkante 3 des Unterteils 2 und die Unterkante 8 des Oberteils 7 können aneinander befestigt und vorzugsweise verriegelt werden.

In der Rampenstellung - Fig. 3 - kann die in Fahrtrichtung hintere Seitenkante 4 des vorderen Unterteils 2 an der vorderen Seitenkante 4 des hinteren Unterteils 2 befestigt, insbesondere verriegelt, sein, um eine gemeinsame Rampe 6 zu bilden. Ebenso können die Oberteile 7 seitlich aneinander befestigt, insbesondere verriegelt, sein, um ein gemeinsames Dach 11 zu bilden.

### Bezugszeichenliste

- 1: Schiebetürflügel
- 2: Unterteil
- 3: Oberkante Unterteil
- 4: Seitenkante Unterteil
- 5: Unterkante Unterteil
- 6: Rampe
- 7: Oberteil
- 8: Unterkante Oberteil
- 9: Seitenkante Oberteil
- 10: Oberkante Oberteil
- 11: Dach

## Patentansprüche

1. Kraftfahrzeug umfassend eine Schiebetüre, wobei die Schiebetüre zumindest einen seitlich am Kraftfahrzeug zwischen einer Geschlossenstellung und einer Offenstellung verschiebbaren Schiebetürflügel (1) umfasst,
**dadurch gekennzeichnet, dass** der Schiebetürflügel (1) einen Unterteil (2) des Schiebetürflügels (1) umfasst, wobei der Unterteil (2) in der Geschlossenstellung der Schiebetür an seiner Oberkante (3) und soweit erforderlich an seinen Seitenkanten (4) von der restlichen Schiebetür lösbar ist und an seiner Unterkante (5) schwenkbar gelagert ist, so dass der Unterteil (2) in der Geschlossenstellung der Schiebetür in eine Rampenstellung geschwenkt werden kann, in welcher der Unterteil (2) eine Rampe (6) bildet.

2. Kraftfahrzeug nach Anspruch 1,
**dadurch gekennzeichnet, dass** der Schiebetürflügel (1) einen Oberteil (7) des Schiebetürflügels (1) umfasst, wobei der Oberteil (7) in der Geschlossenstellung der Schiebetür an seiner Unterkante (8) und soweit erforderlich an seinen Seitenkanten (9) von der restlichen Schiebetür lösbar ist und an seiner Oberkante (10) schwenkbar gelagert ist, so dass der Oberteil in der Geschlossenstellung der Schiebetür in eine Dachstellung geschwenkt werden kann, in welcher das Oberteil ein Dach (11) bildet.

3. Kraftfahrzeug nach Anspruch 2,
**dadurch gekennzeichnet, dass** der Unterteil (2) und der Oberteil (7) zusammen die gesamte Höhe des Türflügels (1) bilden.

4. Kraftfahrzeug nach Anspruch 2 oder 3,
**dadurch gekennzeichnet, dass** die Oberkante (3) des Unterteils (2) und die Unterkante (8) des Oberteils (7) aneinander befestigt und vorzugsweise verriegelt werden können.

5. Kraftfahrzeug nach zumindest einem der vorhergehenden Ansprüche,
**dadurch gekennzeichnet, dass** die Schiebetüre zwei seitlich am Kraftfahrzeug zwischen einer Geschlossenstellung und einer Offenstellung verschiebbare Schiebetürflügel (1) umfasst, wobei in der Offenstellung einer der Schiebetürflügel (1) in Fahrtrichtung nach vorne und der andere Schiebetürflügel (1) nach hinten verschoben ist, wobei beide Schiebetürflügel (1) jeweils einen Unterteil (2) des Schiebetürflügels (1) umfassen, wobei der Unterteil (2) jeweils in der Geschlossenstellung der Schiebetür an seiner Oberkante (3) und gegebenenfalls an seinen Seitenkanten (4) von der restlichen Schiebetür lösbar ist und an seiner Unterkante (5) schwenkbar gelagert ist, so dass die beiden Unterteile (2) in der Geschlossenstellung der Schiebetür in eine Rampenstellung geschwenkt werden können, in welcher beide Unterteile zusammen eine Rampe (6) bilden.

6. Kraftfahrzeug nach Anspruch 5,
**dadurch gekennzeichnet, dass** in der Rampenstellung die in Fahrtrichtung hintere Seitenkante (4) des vorderen Unterteils (2) an der vorderen Seitenkante (4) des hinteren Unterteils (2) befestigt, insbesondere verriegelt, ist.

7. Kraftfahrzeug nach zumindest einem der Ansprüche 5 oder 6,
**dadurch gekennzeichnet, dass** beide Schiebetürflügel (1) jeweils einen Oberteil (7) des Schiebetürflügels (1) umfassen, wobei der Oberteil (7) jeweils in der Geschlossenstellung der Schiebetür an seiner Unterkante (8) und gegebenenfalls an seinen Seitenkanten (9) von der restlichen Schiebetür lösbar ist und an seiner Oberkante (10) schwenkbar gelagert ist, so dass der jeweilige Oberteil (7) in der Geschlossenstellung der Schiebetür in eine Dachstellung geschwenkt werden kann, in welcher beide Oberteile zusammen ein Dach (11) bilden.

## Claims

1. Motor vehicle comprising a sliding door, wherein the sliding door comprises at least one sliding door wing (1) which is displaceable laterally on the motor vehicle between a closed position and an open position,
**characterized in that** the sliding door wing (1) comprises a lower part (2) of the sliding door wing (1), wherein, in the closed position of the sliding door, the lower part (2) is detachable at its upper edge (3) and, if required, at its side edges (4) from the rest of the sliding door and is mounted pivotably at its lower edge (5), and therefore, in the closed position of the sliding door, the lower part (2) can be pivoted into a ramp position in which the lower part (2) forms a ramp (6).

2. Motor vehicle according to Claim 1,
**characterized in that** the sliding door wing (1) comprises an upper part (7) of the sliding door wing (1), wherein, in the closed position of the sliding door, the upper part (7) is detachable at its lower edge (8) and, if required, at its side edges (9) from the rest of the sliding door and is mounted pivotably at its upper edge (10), and therefore, in the closed position of the sliding door, the upper part can be pivoted into a roof position in which the upper part forms a roof (11).

3. Motor vehicle according to Claim 2,
**characterized in that** the lower part (2) and the upper part (7) together form the entire height of the door wing (1).

4. Motor vehicle according to Claim 2 or 3,
**characterized in that** the upper edge (3) of the lower part (2) and the lower edge (8) of the upper part (7) can be fastened and preferably locked to each other.

5. Motor vehicle according to at least one of the preceding claims,
**characterized in that** the sliding door comprises two sliding door wings (1) which are displaceable laterally on the motor vehicle between a closed position and an open position, wherein, in the open position, one of the sliding door wings (1) is displaced forwards in the direction of travel and the other sliding door wing (1) is displaced rearwards, wherein the two sliding door wings (1) each comprise a lower part (2) of the sliding door wing (1), wherein, in each case in the closed position of the sliding door, the lower part (2) is detachable at its upper edge (3) and optionally at its side edges (4) from the rest of the sliding door and is mounted pivotably at its lower edge (5), and therefore, in the closed position of the sliding door, the two lower parts (2) can be pivoted into a ramp position in which the two lower parts together form a ramp (6).

6. Motor vehicle according to Claim 5,
**characterized in that**, in the ramp position, the side edge (4) of the front lower part (2) that is at the rear in the direction of travel is fastened, in particular locked, to the front side edge (4) of the rear lower part (2).

7. Motor vehicle according to at least either of Claims 5 and 6,
**characterized in that** the two sliding door wings (1) each comprise an upper part (7) of the sliding door wing (1), wherein, in each case in the closed position of the sliding door, the upper part (7) is detachable at its lower edge (8) and optionally at its side edges (9) from the rest of the sliding door and is mounted pivotably at its upper edge (10), and therefore, in the closed position of the sliding door, the respective upper part (7) can be pivoted into a roof position in which the two upper parts together form a roof (11).

## Revendications

1. Véhicule automobile comprenant une porte coulissante, la porte coulissante comportant au moins un vantail de porte coulissante (1) qui peut coulisser latéralement contre le véhicule automobile entre une position fermée et une position ouverte,
**caractérisé en ce que** le vantail de porte coulissante (1) comporte une partie inférieure (2) du vantail de porte coulissante (1), la partie inférieure (2), dans la position fermée de la porte coulissante, pouvant être détachée du reste de la porte coulissante au niveau de son arête supérieure (3) et, si nécessaire, au niveau de ses arêtes latérales (4) et étant montée pivotante au niveau de son arête inférieure (5), de sorte que la partie inférieure (2), dans la position fermée de la porte coulissante, peut être pivotée dans une position de rampe dans laquelle la partie inférieure (2) forme une rampe (6) .

2. Véhicule automobile selon la revendication 1,
**caractérisé en ce que** le vantail de porte coulissante (1) comporte une partie supérieure (7) du vantail de porte coulissante (1), la partie supérieure (7), dans la position fermée de la porte coulissante, pouvant être détachée du reste de la porte coulissante au niveau de son arête inférieure (8) et, si nécessaire, au niveau de ses arêtes latérales (9) et étant montée pivotante au niveau de son arête supérieure (10), de sorte que la partie supérieure, dans la position fermée de la porte coulissante, peut être pivotée dans une position de toit dans laquelle la partie supérieure forme un toit (11).

3. Véhicule automobile selon la revendication 2,
**caractérisé en ce que** la partie inférieure (2) et la partie supérieure (7) forment ensemble la hauteur totale du vantail de porte (1).

4. Véhicule automobile selon la revendication 2 ou 3, **caractérisé en ce que** l'arête supérieure (3) de la partie inférieure (2) et l'arête inférieure (8) de la partie supérieure (7) sont fixées l'une à l'autre et peuvent de préférence être verrouillées.

5. Véhicule automobile selon au moins l'une des revendications précédentes, **caractérisé en ce que** la porte coulissante possède deux vantaux de porte coulissante (1) qui peuvent coulisser latéralement contre le véhicule automobile entre une position fermée et une position ouverte, dans la position ouverte, l'un des vantaux de porte coulissante (1) étant coulissé vers l'avant dans le sens du déplacement et l'autre vantail de porte coulissante (1) vers l'arrière, les deux vantaux de porte coulissante (1) comportant respectivement une partie inférieure (2) du vantail de porte coulissante (1), la partie inférieure (2), respectivement dans la position fermée de la porte coulissante, pouvant être détachée du reste de la porte coulissante au niveau de son arête supérieure (3) et éventuellement au niveau de ses arêtes latérales (4) et étant montée pivotante au niveau de son arête inférieure (5), de sorte que les deux parties inférieures (2), dans la position fermée de la porte coulissante, peuvent être pivotées dans une position de rampe dans laquelle les deux parties inférieures forment ensemble une rampe (6).

6. Véhicule automobile selon la revendication 5, **caractérisé en ce que** dans la position de rampe, l'arête latérale (4) arrière dans le sens du déplacement de la partie inférieure (2) avant est fixée, notamment verrouillée, à l'arête latérale (4) avant de la partie inférieure (2) arrière.

7. Véhicule automobile selon au moins l'une des revendications 5 et 6, **caractérisé en ce que** les deux vantaux de porte coulissante (1) comportent respectivement une partie supérieure (7) du vantail de porte coulissante (1), la partie supérieure (7), respectivement dans la position fermée de la porte coulissante, pouvant être détachée du reste de la porte coulissante au niveau de son arête inférieure (8) et éventuellement au niveau de ses arêtes latérales (9) et étant montée pivotante au niveau de son arête supérieure (10), de sorte que la partie supérieure (7) respective, dans la position fermée de la porte coulissante, peut être pivotée dans une position de toit dans laquelle les deux parties supérieures forment ensemble un toit (11).
